# EUROPÄISCHE PATENTSCHRIFT

(11) **EP 0 781 221 B1**
(45) Veröffentlichungstag und Bekanntmachung des Hinweises auf die Patenterteilung: **23.06.1999**
(21) Anmeldenummer: 95930513.7
(22) Anmeldetag: 22.08.1995
(51) Int. Cl.: B60T 13/72, B60T 8/32

(54) **FAHRZEUGBREMSANLAGE MIT EINEM ELEKTRONISCH GESTEUERTEN BREMSKRAFTVERSTÄRKER**
VEHICLE BRAKING SYSTEM WITH AN ELECTRONICALLY CONTROLLED BRAKE BOOSTER
SYSTEM DE FREINAGE POUR VEHICULE AUTOMOBILE A SERVOFREIN A COMMANDE ELECTRONIQUE

(30) Priorität: 13.09.1994 DE 4432583
(43) Veröffentlichungstag der Anmeldung: 02.07.1997
(73) Patentinhaber: LUCAS INDUSTRIES PUBLIC LIMITED COMPANY, Solihull, West Midlands B91 2TX (GB)
(72) Erfinder: SCHLÜTER, Peter, D-56206 Kammerforst (DE); BUBENHEIM, Stefan, D-56077 Koblenz (DE); BEUERLE, Christoph, D-56068 Koblenz (DE); DANNE, Ulrich, D-56170 Bendorf-Sayn (DE)
(74) Vertreter: Schmidt, Steffen J., Dipl.-Ing.
(86) Internationale Anmeldenummer: EP9503338
(87) Internationale Veröffentlichungsnummer: WO9608399

(56) Entgegenhaltungen:
- EP-A- 0 327 276
- EP-A- 0 379 329
- WO-A-93/21048
- WO-A-94/11226
- DE-A- 3 902 215
- DE-A- 4 217 409
- DE-A- 4 309 850
- DE-A- 4 400 688
- DE-C- 4 338 070
- DE-U- 9 202 154

## Beschreibung

Die Erfindung betrifft eine Fahrzeugbremsanlage mit einem elektronisch gesteuerten Bremskraftverstärker.

Bei Fahrzeugbremsanlagen mit Bremskraftverstärkern besteht die Forderung, einen durch den Fahrer eingeleiteten Bremsvorgang in optimaler Weise auszuführen, auch wenn das Verhalten des Fahrers in der jeweiligen Situation nicht immer angemessen ist. Dazu wurden elektromagnetisch betätigbare Zusatzluftsteuerungen vorgesehen, wobei diese in Abhängigkeit von der Betätigungsdynamik des Bremspedals aktiviert wurden (siehe die Anmeldung DE-42 17 409 A1 und die nachveröffentlichte Anmeldung DE-43 09 850 A1 der Anmelderin).

Aus der DE-A 39 02 215 ist ein Unterdruck-Bremskraft-verstärker bekannt, bei dem im Bewegungsbereich eines Ventilkolbens im Steuerventilgehäuse ein Kontaktschalter vorgesehen ist. Dabei ist der erste Kontakt des Kontaktschalters als metallischer-Ring gebildet, der in eine Ausnehmung im Steuerventilgehäuse eingesetzt ist. Der zweite Kontakt des Kontaktschalters ist durch den Ventilkolben selbst gebildet, wobei in einer in dem Ring angeordneten Führungshülse aus isolierendem Material ein axial verschiebbares metallisches Kontaktglied geführt ist, das mittels einer Druckfeder vorgespannt ist und für eine elektrische Verbindung zwischen dem Ring und dem Ventilkolben sorgt. Ein Ventil ist an zwei im Steuerventilgehäuse eingelassene Kontaktelemente angeschlossen, wobei das mit dem Ventilkolben zusammenwirkende Kontaktelement mittels einer Druckfeder gegen den Ventilkolben vorgespannt ist. Die Druckfeder steht hierbei ständig unter Spannung, so daß die Verbindung zwischen der Arbeitskammer des Bremskraftverstärkers und der Unterdruckquelle frei ist. Bei einer Betätigung hebt das Ventilglied von dem Ring ab, so daß die Stromzufuhr zum Ventil und demzufolge auch die Verbindung zwischen der Arbeitskammer und der Unterdruckquelle unterbrochen wird.

Aus der EP 0 327 276 ist ein Bremskraftverstärker bekannt, bei dem zur Betätigung von Bremswarnleuchten neben einem Ventilelement eine Schaltereinrichtung angeordnet ist, und ein Anschlagelement von dem Ventilelement getragen wird, wobei die Schalteinrichtung in Abhängigkeit von einer Bewegung des Anschlagelementes mit dem Ventilelement betätigt wird. Dabei ist die Baugruppe, die die Schalteinrichtung enthält, an einem Gehäuse des Bremskraftverstärkers befestigt, das den Servokolben enthält.

Aus der EP 0 379 329 ist ein Bremskraftverstärker bekannt, bei dem ein Schalter mit zwei Berührungskontakten im Gehäuse des Bremskraftverstärkers angeordnet ist. Ein von einem Bremspedal axial verschobenes Betätigungsglied weist einen seitlich abstehenden Riegel auf, der die beiden Kontakte überbrücken und damit einen Schaltkreis schließen kann.

Aus der nachveröffentlichten DE-44 00 688 A1 ist eine Fahrzeugbremsanlage mit einem elektronisch gesteuerten Bremskraftverstärker bekannt, die ein die Betätigungsbewegung eines Bremspedals zu einem Hauptbremszylinder weiterleitendes Betätigungsglied aufweist, dem ein Wegbegrenzungselement zugeordnet ist, das die axiale Betätigungsbewegung des Betätigungsgliedes begrenzt, indem es zwischen zwei Anschlägen aufgenommen ist.

Um einen vom Fahrer gewollten Abbruch einer Notbremsung sicher und störungsfrei zu erkennen, ist bei dieser Anordnung durch das Wegbegrenzungselement zusammen mit einem der Anschläge ein Schaltelement betätigbar, das bei Anliegen des Wegbegrenzungselementes an dem einen Anschlag ein Signal an die Steuerung des Bremskraftverstärkers abgibt.

Dadurch wird erreicht, daß nur durch die Rücknahme des Bremspedals durch den Fahrer das Schaltelement in der Weise betätigt wird, daß dieses ein Signal auslöst, welches der elektronischen Steuerung der Fahrzeugbremsanlage zugeführt wird, um die maximale Aussteuerung der Bremskraftverstärkung (wie sie im oben genannten Stand der Technik gelehrt wird) wieder zurückzunehmen.

Diese Anordnung ist insofern aufwendig, als Toleranzen und Montageungenauigkeiten einen genau definierten Schaltpunkt nur schwer festlegen lassen.

Aus WO94/11226, welche die Merkmale des Oberbegriffes des Anspruchs 1 aufweist, ist ein Unterdruckbremskraftverstärker bekannt, der eine in Abhängigkeit von der Betätigungsdynamik eines Bremspedals aktivierbare Zusatzluftsteuerung aufweist. Um sicherzustellen, daß ein durchgeführter fremdkraftunterstützter Bremsvorgang beendet wird, sind elektrische Schaltmittel vorgesehen, deren Steuersignale die Stromzufuhr des Elektromagneten beeinflussen. Hierzu lehrt dieses Dokument, am Ventilkolben einen Mikroschalter sowie am bzw. im Steuergehäuse ein Betätigungselement anzuordnen. Dieses Dokument führt weiterhin Möglichkeiten zum Ausgleich von Montagetoleranzen und zum Erreichen eines verbesserten Schaltverhaltens des Mikroschalters an. Dabei erscheinen die Anordnungen des Mikroschalters und die vorgeschlagenen Ausführungsformen dennoch als aufwendig aufzubauen sowie als schwierig zu montieren und einzustellen.

Der vorliegenden Erfindung liegt daher das Problem zugrunde, die aus WO 94/11226 bekannten Nachteile des aufwendigen Aufans und der Schwierigen Einstellung eines Schaltelements zu beheben und eine einfach montierbare, platzsparende Anordnung eines Schaltelements bereitzustellen, die Toleranzen auszugleichen in der Lage ist, so daß der Schaltpunkt sicher festlegbar ist.

Zur Lösung des Problems ist die eingangs genannte Vorrichtung durch die Merkmale des Anspruchs 1 gekennzeichnet.

Durch diese Anordnung des Schaltelementes kann ein Fahrerwunsch sicher erkannt werden, so daß z.B. eine Deaktivierung der Bremsunterstützung beim Übergang von einer Notbremsung in eine Zielbremsung möglich ist. "Notbremsung" bedeutet hierbei eine Bremsung mit geringstem Anhalteweg, wogegen eine "Zielbremsung" z.B. eine Bremsung bis zu einem bestimmten Hindernis ist

Weitere Eigenschaften und Vorteile der Erfindung werden in der nachfolgenden Beschreibung von Ausführungsbeispielen unter Bezugnahme auf die beigefügten Zeichnungen erläutert.
Fig. 1 zeigt einen Bremskraftverstärker in einer schematischen Schnittdarstellung.
Fig. 2 zeigt einen Teil des mit II bezeichneten Ausschnitt des Ventils von Fig. 1 in einer vergrößerten schematischen Ansicht.
Fig. 3 zeigt einen Träger gemäß der Erfindung in einer ersten Ausführungsform in einer schematischen Draufsicht.
Fig. 4 zeigt einen Träger mit einem Schaltelement in einer zweiten Ausführungsform in einer schematischen Draufsicht.
Fig. 5 zeigt den Träger mit dem Schaltelement gemäß Fig. 4 in einer schematischen Seitenansicht, wie er beispielhaft in Fig. 1 im mit II bezeichneten Ausschnitt gezeigt ist.
Fig. 6 zeigt den Träger mit dem Schaltelement gemäß Fig. 4 in einer weiteren Draufsicht.
Fig. 7 zeigt einen Träger mit einem Schaltelement in einer dritten Ausführungsform in einer schematischen Draufsicht.
Fig. 8 zeigt den Träger mit dem Schaltelement gemäß Fig. 7 in einer schematischen Seitenansicht.

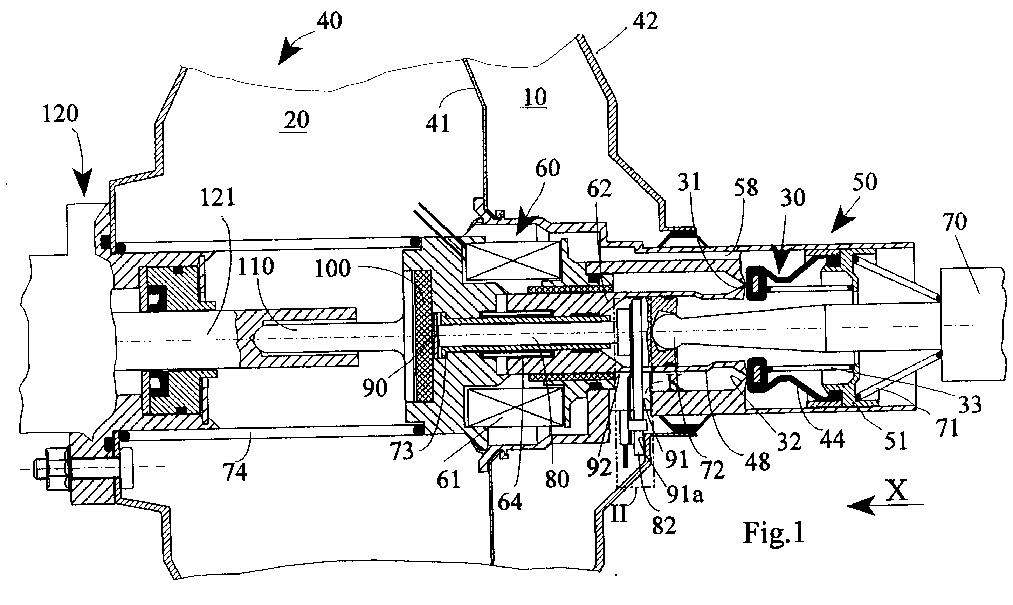

In Fig. 1 ist ein pneumatischer Bremskraftverstärker einer Fahrzeugbremsanlage im Überblick veranschaulicht, der mit einem Schaltelement gemäß einer Ausführungsform der Erfindung versehen ist.

Der dargestellte Bremskraftverstärker 40 hat ein im wesentlichen rotationssymmetrisches Gehäuse 42, in dem eine hintere Kammer 10 sowie eine vordere Kammer 20 angeordnet und durch eine bewegliche Wand 41 voneinander getrennt sind. Zum Bremskraftverstärker gehört ein erstes steuerbares Ventil 30, das mit der beweglichen Wand 41 zu gemeinsamer Relativbewegung in bezug auf das Gehäuse 42 verbunden ist. Auf das Ventil 30 wirkt das vordere Ende 72 eines stangenförmigen Betätigungsgliedes 70, das im Einbauzustand mit einem (nicht gezeigten) Bremspedal des Kraftfahrzeuges verbunden ist.

Innerhalb des Bremskraftverstärkers ist ein Kraftabgabeglied 110 angeordnet, das sich an dem Ventilgehäuse 50 mittelbar abstützt. Das Kraftabgabeglied 110 ist zur Betätigung eines (schematisch veranschaulichten) Hauptbremszylinders 120 vorgesehen.

Im Ruhezustand bei abgeschalteter Vakuumquelle, herrscht in beiden Kammern 10 und 20 Atmosphärendruck. Bei eingeschalteter Unterdruckquelle, also beispielsweise bei laufendem Motor, mit dessen Ansaugrohr die vordere Kammer 20 verbunden ist, entsteht in der vorderen Kammer 20 ein Unterdruck, so daß die bewegliche Wand 41, und mit ihr das Ventil 30, geringfügig nach vorne verschoben wird, wodurch sich ein erneutes Druckgleichgewicht zwischen den beiden Kammern 10 und 20 einstellt. Von dieser Bereitschaftsstellung aus ist eine verlustwegfreie Betätigung des Bremskraftverstärkers gewährleistet.

Bei einer normalen Bremsbetätigung durch den Fahrer arbeitet der Bremskraftverstärker in üblicher Weise, indem die Verbindung zwischen den beiden Kammern 10 und 20 über das steuerbare Ventil 30 unterbrochen wird und Umgebungsluft in die hintere Kammer 10 strömt. Infolgedessen steht nun eine durch den Bremskraftverstärker verstärkte Betätigungskraft am Kraftabgabeglied 110 zur Verfügung.

Das Betätigungsglied 70 ragt in ein Steuergehäuse 50, das mit der beweglichen Wand 41 fest verbunden und in dem Gehäuse 42 axial verschiebbar ist. Das Steuergehäuse 50 trägt an seinem hinteren Ende ein Ventilschließglied 44, das mit einem inneren Ventilsitz 31 an einem Ventilkolben 48 und mit einem äußeren Ventilsitz 32 in Eingriff kommen kann, der an der Innenseite des Steuergehäuses 50 ausgebildet ist. Der Ventilkolben 80 ist mit dem freien Ende 72 des Betätigungsgliedes 70 formschlüssig verbunden. Das Ventilschließglied 44 ist mittels einer sich an einem ringförmigen Käfig 51 abstützenden Druckfeder 33 gegen den äußeren Ventilsitz 32 gedrückt. Die hintere Kammer 10 ist somit gegenüber der vorderen Kammer 20 abgedichtet, da ein Durchlaßkanal 58 versperrt ist.

Eine Vorwärtsbewegung in Richtung des Pfeiles X des Betätigungsgliedes 70 wird über den Ventilkolben 80, eine Fühlscheibe 90 und ein in einer stirnseitigen Ausnehmung des Ventilgehäuses 50 aufgenommenes gummielastischen Teil 100 auf das Kraftabgabeglied 110 weitergeleitet, das die Bewegung auf einen Betätigungskolben 121 eines schematisch dargestellten Hauptzylinders 120 der Bremsanlage überträgt, der am unterdruckseitigen Ende des Bremskraftverstärkers angebracht ist.

Eine zweite Druckfeder 71, die zwischen dem Betätigungsglied 70 und dem Käfig 51 angeordnet ist, bewirkt eine Vorspannung des Betätigungsgliedes 70 gegenüber dem Steuerventilgehäuse 50.

Die Fühlscheibe 90 ist so zwischen dem Ventilkolben 80 und dem gummielastischen, scheibenförmigen Teil 100 angeordnet, daß ihre axiale Beweglichkeit einerseits durch das gummielastische Teil 100 und andererseits durch einen als Rückanschlag wirkenden Ringbund 73 begrenzt ist, durch den der Ventilkolben 80 hindurchragt und auf die Fühlscheibe 90 wirkt.

Die axiale Beweglichkeit des Ventilkolbens 80 - und damit auch des mit diesem verbundenen Betätigungsgliedes 70 - ist durch ein Wegbegrenzungselement 82 begrenzt, das in dem Ventilkolben 80 in einer Ringnut mit zwei Bünden 83, 84 formschlüssig aufgenommen ist. Das Wegbegrenzungselement 82 hat die Gestalt einer im wesentlichen U-förmigen Klammer, deren Schenkel im mittleren Bereich aufeinander zugeknickt sind, damit der Ventilkolben 80 durch diese fest umschlossen wird. Das Wegbegrenzungselement 82 ragt in einen Kanal K, der zu der hinteren Kammer 10 führt. Zwischen den beiden Schenkeln 89a, 89b des Wegbegrenzungselements 82 ist an einem Träger 86 ein Schaltelement 85 angeordnet. Die Wände des Kanals K sind als Anschlagflächen 91, 92 ausgebildet, zwischen denen das Wegbegrenzungselement 82 axial hin- und herbewegbar ist.

Der Abstand zwischen dem als Rückanschlag wirkenden Ringbund 73 und der Fühlscheibe 90, an der unter Mitwirkung des Wegbegrenzungselements 82 das Schaltelement 85 betätigbar ist, ist so bemessen, daß beim Anliegen der Fühlscheibe 90 an dem Ringbund 73 das Wegbegrenzungselement 82 bzw. das zugeordnete Schaltelement 85 von der Anschlagfläche 91 noch eine Strecke entfernt ist. Auf diese Weise ist sichergestellt, daß zur Betätigung des Schaltelementes 85 das Wegbegrenzungselement 82 noch die Strecke in Richtung auf die Anschlagfläche 91 hin zurückzulegen hat.

Dabei ist die Strecke so bemessen, daß eine Fehlbetätigung des Schaltelementes 85 aufgrund einer beispielsweise im Rahmen eines ABS-Betriebes auftretenden Rückstellung des Betätigungsgliedes 110 bzw. der Fühlscheibe 90 durch hydraulische Kräfte ausgeschlossen ist.

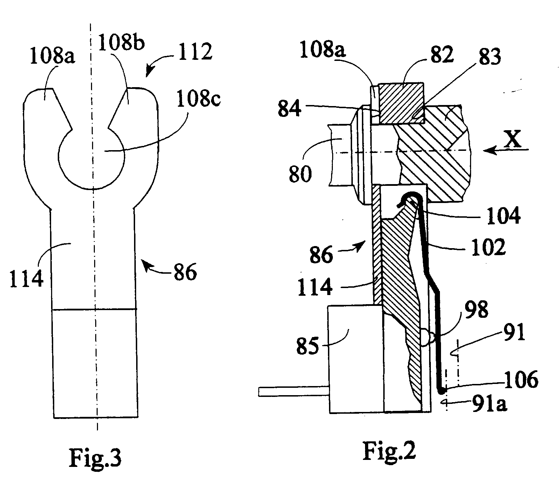

In Fig. 2 ist der mit II bezeichnete Bereich von Fig. 1 in vergrößerter Darstellung gezeigt. An dem Träger 86 ist das Schaltelement 85 z.B. durch Klebung so befestigt, daß ein Schaltknopf 98 des Schaltelementes 85 die beiden Schenkel 89a, 89b in Richtung auf den Anschlag 91 überragt. Das Schaltelement 85 weist einen schwenkbaren Schalthebel 102 auf, der aus einem Blechformteil besteht, das an seinem einen Ende an einem Zapfen 104 schwenkbar gelagert ist und das an seinem anderen Ende einen Wulst 106 aufweist, der in der unbetätigten Stellung an einer Wand 91a des Gehäuses 42 des Bremskraftverstärkers anliegt.

Der in Fig. 3 in einer Draufsicht gezeigte Träger 86 weist zwei Klauen 108a, 108b auf, die zwischen sich einen kreis-förmigen Bereich 108c begrenzen, dessen Durchmesser dem Durchmesser des Nutgrundes der Ringnut zwischen den beiden Bünden 83, 84 entspricht. Der kreisförmige Bereich 108c erweitert sich zum freien Ende 112 des Trägers 86 hin trichterförmig, so daß der Träger 86 in die Ringnut eingeschoben und mit dem Nutgrund verrastet werden kann. Ein Tragarm 114 des Trägers 86 ist an die Klauen 108a, 108b einstückig angeformt und dient zur Aufnahme des Schaltelementes 85. Der Tragarm 114 liegt an dem Wegbegrenzungselement 82 bzw. dessen Schenkeln 89a, 89b stirnseitig an (siehe Fig. 2). Die Klauen 108 a, 108b und der Tragarm 114 sind aus einem blattförmigen, elastischen Material - vorzugsweise Federstahl - gestaltet und in der in Fig. 3 gezeigten Zeichenebene so gewölbt, daß der Träger 86 zusammen mit dem Wegbegrenzungselement 82 in der Ringnut spielfrei zwischen den beiden Bünden 83, 84 aufgenommen ist. Das heißt, daß die Ringnut in axialer Richtung vollständig durch das Wegbegrenzungselement 82 und die Klauen 108a, 108b ausgefüllt ist, ohne daß ein Zwischenraum zwischen dem Bund 84, dem Träger 86, dem Wegbegrenzungselement 82 und dem Bund 83 verbleibt.

Da das Wegbegrenzungselement 82 zusammen mit dem Träger 86 in der Ringnut zwischen den Bünden 83, 84 aufgenommen ist und zusammen mit diesem in oder gegen die Pfeilrichtung X verschoben wird, kann das Schaltelement 85 die Endposition des Wegbegrenzungselementes 82 an dem Anschlag 91 sicher erkennen und ein entsprechendes Signal abgeben. Durch die Auftrennung in zwei separate Bauteile - das Wegbegrenzungselement 82 und den Träger 86 - ist sichergestellt, daß bei einem Anliegen des Schaltelementes 85 an dem Anschlag 91 das Schaltelement 85 nicht beschädigt werden kann, da durch die Elastizität des Trägers 86 bzw. dessen Tragarms 114 das Schaltelement 88 nach hinten ausweichen kann. Es versteht sich, daß die Betätigungskraft des Schaltknopfes 98 geringer ist als die zum Verformen des Trägers 86 erforderliche Kraft.

Durch die Klauen 108a, 108b des Trägers 86 werden zwei Funktionen ausgeführt. Zum einen wird die Halterung des Tragarms 114 für das Schaltelement 85 erreicht. Zum anderen wird die spielfreie Montage des Wegbegrenzungselementes 82 in der Nut bewirkt. Eine ggf. auftretende Verformung des Wegbegrenzungselementes 82 hat keinen Einfluß auf das Schaltverhalten des Schaltelementes 85.

Im Betrieb sind folgende drei Situationen zu unterscheiden:
1. In einer Lösestellung ist das Bremspedal unbetätigt und die Bremse deaktiviert. Hierbei ist das Steuerventilgehäuse 50 des Steuerventils 30 und das Betätigungsglied 70 durch die Rückstellfedern 74 und 71 in die in Fig. 1 rechte Anschlagposition gebracht, so daß das Wegbegrenzungselement 82 und der Wulst 106 des Schalthebels 102 an der Wand 91a unter Vorspannung anliegt (siehe Fig. 2). Dabei ist das Schaltelement 85 betätigt.
2. Bei einer Betätigung des Bremspedals wandert das Betätigungsglied 70 mit dem Steuerventilgehäuse 50 nach links in Richtung des Pfeils X (Fig. 1), wodurch sich das Wegbegrenzungselement 82 und der Wulst 106 des Schalthebels 102 von der Wand 91a lösen (siehe Fig. 2). Damit ist das Schaltelement 85 unbetätigt.
   Zur Erhöhung der Sicherheit wird bei jeder Bremsbetätigung überprüft, ob beim Lösen des Wulstes 106 von der Wand 91a ein Signal von dem Schaltelement 85 abgegeben wird.
3. Durch eine Rücknahme des Bremspedales bewegt sich das Betätigungsglied 70 relativ zum Steuerventilgehäuse 50 nach rechts, bis das Wegbegrenzungselement 82 bzw. der Schalthebel 102 des Schaltelementes 85 am Anschlag 91 anliegen. Dabei wird das Schaltelement 85 betätigt und ein Signal an die elektronische Steuerung des Bremskraftverstärkers abgegeben, damit durch diese eine unterstützte Notbremsung abgebrochen bzw. die Einleitung einer Zielbremsung erreicht werden.

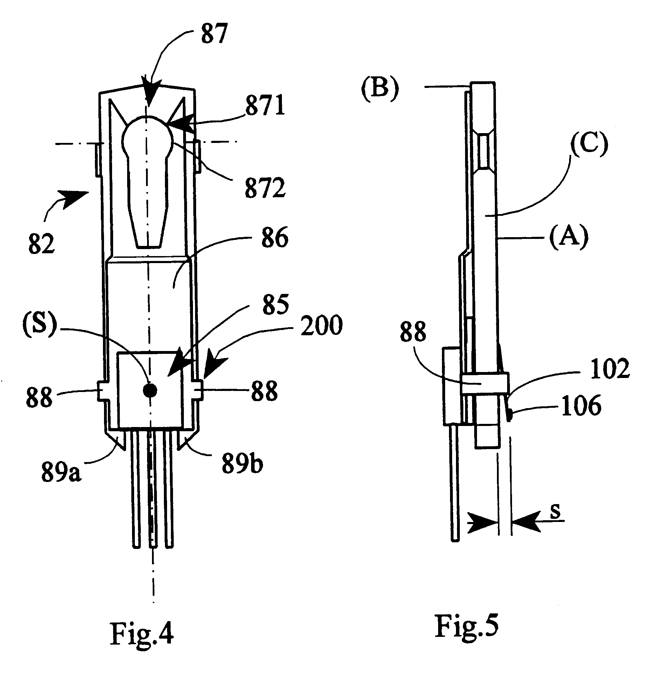

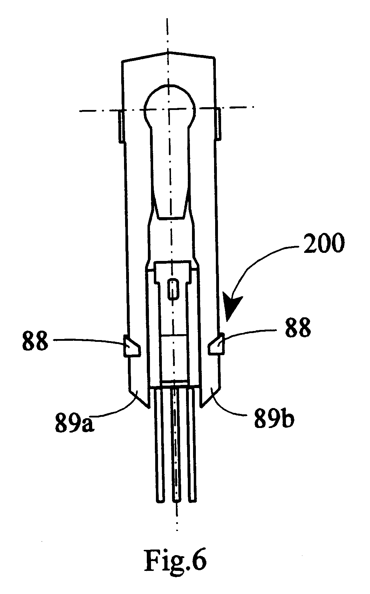

Fig. 4 und 5 zeigt das Wegbegrenzungselement 82 mit einem aufgesteckten Schaltelement 85 in einer weiteren Ausführungsform, wobei Fig. 5 das Schaltelement 85 in seiner dem Bremspedal zugewandten Stellung zeigt. Das eigentliche Schaltelement 85 ist dabei mit dem Träger 86 starr verbunden. Am Träger 86 stehen zwei abgewinkelte Haltearme 88 seitlich ab, die die beiden Schenkel des Wegbegrenzungselement 82 seitlich umgreifen und zur gegenüberliegenden Seite hin über eine vorzugsweise rechtwinklige Abkantung der Haltearme 88 zur Anlage an der dem Bremspedal zugewandten Seite geschlossen sind (siehe Fig. 6). Die beiden Haltearme 88 bilden dadurch ein Halteglied 200, welches das Wegbegrenzungselement 82 und den Träger 86 formschlüssig verbindet. Der Schalthebel 102 des Schalterelements 85 ist zwischen den Schenkeln 89a, 89b des Wegbegrenzungselements 82 aufgenommen und ragt um einen definierten Schaltweg (s) (Fig. 5) über die Anschlagfläche (A) hinaus.

Wie in Fig. 5 ersichtlich, erstreckt sich der Träger 86 vom Schaltelement 85 aus bis etwa zur Mitte des Wegbegrenzungselements 82 und ist dann soweit abgekantet, daß die restliche Erstreckung plan an der Fläche (B) zur Anlage kommt.

An dem oberen Ende (Fig. 4) des Trägers 86 befindet sich eine gabelförmige Öffnung 87, welche über eine Engstelle 871 in einen Aufnahmeradius 872 entsprechend dem Durchmesser der Ringnut zwischen den Bünden 83, 84 übergeht. Der Träger 86 kann somit axial mit dem Betätigungsglied 70 verrastet werden, womit zumindest die radiale Position des Schalters fixiert ist.

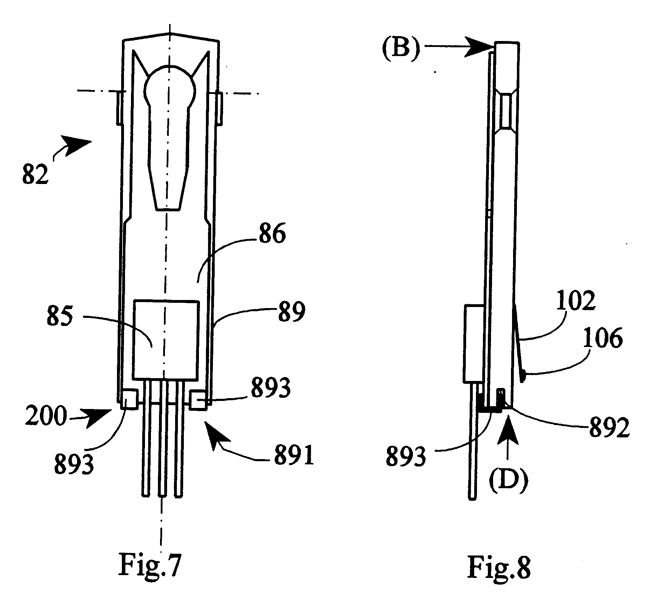

Eine weitere Befestigungsvariante zeigen Fig. 7 und Fig. 8. Der Träger 86 erstreckt sich hierbei plan zur Fläche (B) des Wegbegrenzungselements 82 bis zu den Schenkelenden 891. Eine schlitzförmige Vertiefung 892 in den Stirnseiten der Schenkel des Wegbegrenzungselements 82 nimmt die Halteklammern 893 auf, die im Querschnitt annähernd U-förmig gebildet sind. Diese Klammern 893 greifen zum einen in die Vertiefung 892 der Schenkel 89a, 89b und zum anderen den bündig abschließenden Träger 86. Sie bilden so ein Halteglied 200, welches das Wegbegrenzungselement 82 und den Träger 86 verbindet. Während der Montage wird dabei der U-förmige Querschnitt um ein definiertes Maß elastisch aufgeweitet um eine Anlage der Klammern 893 unter Vorspannung zu erreichen. Damit ist sichergestellt, daß sich die Klammern 883 in Funktionsbetrieb nicht lösen können. Der sichere Sitz kann auch wahlweise durch eine Klebung oder Materialverstemmung der Klammern 893 mit den Schenkeln des Wegbegrenzungs- elements 82 erreicht werden.

Innerhalb des Bremskraftverstärkers 40 ist ein Elektromagnetventil 60 bestehend aus einer Spule 61 und einem Anker 62 angeordnet.

Der Anker 62 wird durch die Wirkung der Rückstellfeder 64 gegen das Wegbegrenzungselement 82 gedrückt, wodurch in Betätigungsrichtung (X) eine spielfreie und gleichförmige Bewegung der beiden Bauteile während einer normalen Betätigung über das Bremspedal erreicht wird.

Von einer normalen Betätigung wird in diesem Zusammenhang dann gesprochen, wenn die Pedalbetätigungsgeschwindigkeitsschwelle, gesetzt zur Auslösung eines automatischen Bremsvorganges, nicht erreicht wird. Die Betätigung des Bremspedals wird dann über das Betätigungsglied 70 in das Bremsgerät eingeleitet, wodurch das Betätigungsglied 70 relativ zum Steuergehäuse 50 verschoben wird. Durch den direkten Kontakt des Ankers 62 mit dem Wegbegrenzungselement 82 wird eine Relativbewegung direkt übertragen, wodurch der innere Dichtsitz 31, zumindest mit dem Anker 62 verbunden, von seinem Sitz gegen das Steuerventil 30 gelöst und die Verbindung von unter atmosphärischem Druck stehender Luft zur Kammer 10 des Bremskraftverstärkers 40 ermöglicht wird. Die Größe der Relativbewegung hängt dabei davon ab, wie weit die Fühlscheibe 90 in die elastische Reaktionsscheibe 100 eindringen kann.

Der sich nun aufbauende Differenzdruck zwischen den Kammern 10, 20 aktiviert in üblicher Weise die Bremskraftverstärkung, die über die bewegliche Wand 41 in das Steuergehäuse 50 eingeleitet wird. Als zentrales Übertragungsglied hat nun die Reaktionsscheibe 100 die Aufgabe, die Verstärkerkraft und die Pedalkraft an den Reaktionskolben 110 weiterzuleiten, der direkt mit einem Hauptbremszylinder 120 in Eingriff steht.

Wird die Bremsung beendet, d.h. das Bremspedal zurückgenommen, wird zuerst nur die Pedalkraftkomponente der gesamten Hauptzylinderbetätigungskraft zurückgeführt, wobei die Verstärkerkraft entsprechend der letzten Pedalstellung solange weiter erhalten bleibt, bis durch die Relativbewegung zwischen dem Betätigungsglied 70 und dem Steuergehäuse 50 das Steuerventil 30 gegen die Betätigungsrichtung (X) soweit zurückgenommen wird, bis durch die darauf erfolgende Verbindung der Kammer 10 mit der Kammer 20 die Verstärkerdruckdifferenz abbaut und die Verstärkerkraft entsprechend zurückgeführt wird. Bei dieser relativen Rückhubbewegung zwischen dem Betätigungsglied 70 und dem Steuergehäuse 50 stößt das Wegbegrenzungselement 82 bzw. das angeschlossene Schaltelement 85 gegen die hintere Begrenzung 91 des Kanals K im Steuergehäuse, wodurch der Schalthebel 102 durchgeschaltet wird. Dieser Schaltvorgang findet unabhängig von einer Überlagerung der elektromagnetischen Betätigung bei jeder Beendigung des Bremsvorganges durch die Pedalrücknahme statt.

Anstatt den Träger 86 in der Ringnut in dem Betätigungsglied 70, 80 so anzuordnen, daß der Träger in seiner radialen Beweglichkeit eingeschränkt oder vollständig behindert ist, kann der Träger 86 auch in geeigneter Weise durch ein Halteglied 200 nur mit dem Wegbegrenzungselement 82 verbunden sein. Das Halteglied 200 stellt eine formschlüssige Verbindung zwischen Wegbegrenzungselement 82 und Träger 86 her. Dies kann z.B. durch eine Verklammerung des Trägers 86 an dem Wegbegrenzungselement 82 in der Weise erfolgen, daß die dafür verwendeten Haltearme 88 an dem Träger einstückig angeformt sind und in Ausnehmungen eingreifen, die seitlich an den Schenkeln des Wegbegrenzungselementes ausgeformt sind.

Auch das Schaltelement 85 selbst kann mit dem Wegbegrenzungselement 82 verbunden werden. Hierbei weist das Halteglied 200 wenigstens einen an dem Schaltelement 85 einstückig angeformten Haltearm 88, der das Wegbegrenzungselement 82 zumindest teilweise formschlüssig umgreift, oder eine klammer 893, die das Schaltelement 85 gegen das Wegbegrenzungselement 82 federnd verspannt, auf. Damit kann sich der Träger mit dem Schaltelement in radialer Richtung bezogen auf das Betätigungsglied 70, 80 nicht weiter bewegen als das Wegbegrenzungselement, so daß der definierte schaltbetrieb des Schaltelements unbeeinträchtigt ist.

## Patentansprüche

1. Fahrzeugbremsanlage mit einem elektronisch gesteuerten pneumatischen Bremskraftverstärker (40), der eine in Abhängigkeit von der Betätigungsdynamik eines Bremspedals aktivierbare Zusatzluftsteuerung aufweist, und der
- ein die Betätigungsbewegung des Bremspedals zu einem Hauptbremszylinder weiterleitendes Betätigungsglied (70, 80), dem ein zwischen zwei Anschlägen (91 oder 91a, 92) aufgenommenes Wegbegrenzungselement (82) zugeordnet ist, das die Betätigungsbewegung des Betätigungsgliedes (70) begrenzt, und
- ein Schaltelement (85) aufweist, das bei einer Betätigungsbewegung des Betätigungsgliedes (70, 80) durch einen Anschlag (91a) betätigbar ist, um ein Signal an die Steuerung des Bremskraftverstärkers abzugeben, dadurch gekennzeichnet, daß
- das Wegbegrenzungselement (82) an dem Betätigungsglied (70, 80) in Betätigungsrichtung spielfrei angeordnet ist, und
- ein das Schaltelement (85) aufnehmender Träger (86) mit dem Wegbegrenzungselement (82) verbunden ist.

2. Fahrzeugbremsanlage nach Anspruch 1, dadurch gekennzeichnet, daß
das Wegbegrenzungselement (82) an dem Betätigungsglied (70, 80) zwischen zwei Bünden (83, 84) angeordnet ist und daß der Träger (86) zwischen dem Wegbegrenzungselement (82) und einem der beiden Bünde (83, 84) angeordnet ist.

3. Fahrzeugbremsanlage nach Anspruch 1 oder 2, dadurch gekennzeichnet, daß
- der Träger (86) zwei Klauen (108a, 108b) aufweist, die das Betätigungsglied (80) zumindest teilweise formschlüssig umgreifen.

4. Fahrzeugbremsanlage nach Anspruch 1, 2 oder 3, dadurch gekennzeichnet, daß
- der Träger (86) sich im wesentlichen parallel zu dem Wegbegrenzungselement (82) zwischen den beiden die Betätigungsbewegung des Betätigungsgliedes (70) begrenzenden Anschlägen (91, 92) erstreckt.

5. Fahrzeugbremsanlage nach einem der vorhergehenden Ansprüche, dadurch gekennzeichnet, daß
- der Träger (86) einen Tragarm (114) aufweist, an dem das Schaltelement (85) angeordnet ist.

6. Fahrzeugbremsanlage nach wenigstens Anspruch 3 und 5, dadurch gekennzeichnet, daß
- die Klauen (108a, 108b) und/oder der Tragarm (114) aus einem blattförmigen, elastischen Material gestaltet sind.

7. Fahrzeugbremsanlage nach wenigstens Anspruch 2, 3 und 5, dadurch gekennzeichnet, daß
- die Klauen (108a, 108b) und/oder der Tragarm (114) so gewölbt sind, daß das Wegbegrenzungselement (82) und der Träger (86) zwischen den beiden Bünden (83, 84) spielfrei aufgenommen ist.

8. Fahrzeugbremsanlage nach wenigstens Anspruch 5, dadurch gekennzeichnet, daß
- der Tragarm (114) an dem Wegbegrenzungselement (82) anliegt.

9. Fahrzeugbremsanlage nach einem der vorhergehenden Ansprüche, dadurch gekennzeichnet, daß
- das Schaltelement (85) zwischen zwei Schenkeln (89a, 89b) des Wegbegrenzungselementes (82) hindurchragt und gegen den das Schaltelement (85) betätigenden Anschlag (91a) gerichtet ist.

10. Fahrzeugbremsanlage nach einem der vorhergehenden Ansprüche, dadurch gekennzeichnet, daß
- das Schaltelement (85) einen schwenkbaren Schalthebel (102) aufweist, dessen freies Ende (106) an dem das Schaltelement (85) betätigenden Anschlag (91a) zur Anlage kommen kann.

11. Fahrzeugbremsanlage nach Anspruch 10, dadurch gekennzeichnet, daß der das Schaltelement (85) betätigende Anschlag (91a) durch ein Gehäuse (42) des Bremskraftverstärkers gebildet ist.

12. Fahrzeugbremsanlage nach Anspruch 10, dadurch gekennzeichnet, daß der Schalthebel (102) am Anschlag (91) des Wegbegrenzungselements (82) und an dem das Schaltelement (85) betätigenden Anschlag (91a) zur Anlage bringbar ist.

13. Fahrzeugbremsanlage nach einem der Ansprüche 1 bis 12, dadurch gekennzeichnet, daß der Träger (86) mit dem Wegbegrenzungselement (82) längs der Richtung der Betätigungsbewegung des Betätigungsgliedes (70, 80) unverlierbar verbunden ist.

14. Fahrzeugbremsanlage nach einem der Ansprüche 1 bis 12, dadurch gekennzeichnet, daß das Schaltelement (85) durch wenigstens ein Kalteglied (200) mit dem Wegbegrenzungselement (82) unverlierbar verbunden ist, wobei das Halteglied (200) den Träger (86) oder das Schaltelement (85) mit dem Wegbegrenzungselement (82) verbindet.

15. Fahrzeugbremsanlage nach Anspruch 14, dadurch gekennzeichnet, daß das Halteglied (200) wenigstens einen an dem Träger (86) oder dem Schaltelement (85) einstückig angeformten Haltearm (88) aufweist, der das Wegbegrenzungselement (82) zumindest teilweise formschlüssig umgreift.

16. Fahrzeugbremsanlage nach Anspruch 14, dadurch gekennzeichnet, daß das Halteglied (200) wenigstens eine Klammer (893) aufweist, die den Träger (86) oder das Schaltelement (85) gegen das Wegbegrenzungselement (82) preßt.

17. Fahrzeugbremsanlage nach Anspruch 16, dadurch gekennzeichnet, daß die Klammer (893) als Federklammer ausgebildet ist, die den Träger (86) oder das Schaltelement (85) gegen das Wegbegrenzungselement (82) federnd verspannt.

18. Fahrzeugbremsanlage nach einem der Ansprüche 14 bis 17, dadurch gekennzeichnet, daß das wenigstens eine Halteglied (200) im Bereich des Schaltelementes (85) angeordnet ist.

19. Fahrzeugbremsanlage nach einem der Ansprüche 14 bis 16, dadurch gekennzeichnet, daß das wenigstens eine Halteglied (200) im Bereich des von dem Betätigungsglied (70, 80) abliegenden Ende des Wegbegrenzungselementes (82) angeordnet ist.

20. Fahrzeugbremsanlage nach Anspruch 19, dadurch gekennzeichnet, daß das wenigstens eine Halteglied (200) in eine Ausnehmung (892) in dem Wegbegrenzungselement (89) eingreift.

## Claims

1. A vehicle brake system with an electronically controlled pneumatic booster (40) having an additional air control which can be activated in response to the actuation dynamics of a brake pedal, and which comprises
- an actuation member (70, 80) transmitting the actuation movement of the brake pedal to a master brake cylinder, which is allocated a travel limiting element (82) accepted between two abutments (91 or 91a, 92) which limits the actuation movement of the actuation member (70), and
- a switching element (85) which can be activated by an abutment (91a) upon an actuation movement of the actuation member (70, 80) in order to issue a signal to the controller of the brake booster,
characterized in that
- the travel limiting element (82) is arranged clearance-free in the direction of actuation at the actuation member (70, 80), and
- a carrier (86) accepting the switching element (85) is connected with the travel limiting element (82).

2. The vehicle brake system according to Claim 1,
characterized in that
- the travel limiting element (82) is arranged between two collars (83, 84) at the actuation element (70, 80), and the carrier (86) is arranged between the travel limiting element (82) and one of the two collars (83, 84).

3. The vehicle brake system according to Claim 1 or 2, characterized in that
- the carrier (86) comprises two claws (108a, 108b) which encompass an actuation member (80) in an at least partially positive manner.

4. The vehicle brake system according to Claim 1, 2 or 3, characterized in that
- the carrier (86) extends essentially parallel to the travel limiting element (82) between the two abutments (91, 92) which limit the actuation movement of the actuation member (70).

5. The vehicle brake system according to one of the previous claims, characterized in that
- the carrier (86) comprises a carrier arm (114) on which the switching element (85) is arranged.

6. The vehicle brake system according to at least Claims 3 and 5, characterized in that
- the claws (108a, 108b) and/or the carrier arm (114) are formed from a sheet-type elastic material.

7. The vehicle brake system according to at least Claims 2, 3 and 5, characterized in that
- the claws (108a, 108b) and/or the carrier arm (114) are arched in such a manner that the travel limiting element (82) and the carrier (86) are accepted clearance-free between the two collars (83, 84).

8. The vehicle brake system according to at least Claim 5, characterized in that
- the carrier arm (114) abuts the travel limiting element (82).

9. The vehicle brake system according to one of the previous claims, characterized in that
- the switching element (85) protrudes between two legs (89a, 89b) of the travel limiting element (82) and is directed towards the abutment (91a) which activates the switching element (85).

10. The vehicle brake system according to one of the previous claims, characterized in that
- the switching element (85) comprises a pivotable control lever (102), the free end (106) of which can contact the abutment (91a) which activates the switching element (85).

11. The vehicle brake system according to Claim 10, characterized in that the abutment (91a) activating the switching element (85) is formed by a housing (42) of the brake booster.

12. The vehicle brake system according to Claim 10, characterized in that the control lever (102) can be brought to abut the abutment (91) of the travel limiting element (82) and the abutment (91a) activating the switching element (85).

13. The vehicle brake system according to one of Claims 1 through 12, characterized in that the carrier (86) is captively coupled with the travel limiting element (82) along the direction of the actuation movement of the actuation member (70, 80).

14. The vehicle brake system according to one of Claims 1 through 12, characterized in that the switching element (85) is captively coupled with the travel limiting element (82) by at least one retaining member (200), with the retainung member (200) connecting the carrier (86) or the switching element (85) with the travel limiting element (82).

15. The vehicle brake system according to Claim 14, characterized in that the retaining member (200) includes at least one retaining arm (88) being integrally formed at the carrier (86) or the switching element (85) and encompassing the travel limiting element (82) in an at least partially positive manner.

16. The vehicle brake system according to Claim 14, characterized in that the retaining member (200) comprises at least one clamp (893) which urges the carrier (86) or the switching element (85) against the travel limiting element (82).

17. The vehicle brake system according to Claim 16, characterized in that the clamp (893) is designed as a spring clamp which resiliently clamps the carrier (86) or the switching element (85) against the travel limiting element (82).

18. The vehicle brake system according to one of Claims 14 through 17, characterized in that at least one retaining member (200) is arranged in the area of the switching element (85).

19. The vehicle brake system according to one of Claims 14 through 16, characterized in that the at least one retaining member (200) is arranged in the area of the end of the travel limiting element (82) remote from the actuation member (70, 80).

20. The vehicle brake system according to Claim 19, characterized in that the at least one retaining member (200) engages a recess (892) in the travel limiting element (89).

## Revendications

1. Système de freinage comprenant un servofrein (40) pneumatique à commande électronique qui présente une commande d'air supplémentaire pouvant être activée en fonction de la dynamique d'actionnement d'une pédale de frein et qui présente
- un élément d'actionnement (70, 80) transmettant le mouvement d'actionnement de la pédale de frein à un maître cylindre de frein, auquel est associé un élément limiteur de trajet (82) logé entre deux arrêts (91 ou 91a, 92) qui limite le mouvement d'actionnement de l'élément d'actionnement (70), et
- un élément de circuit (85) qui peut être actionné par un arrêt (91a) lors d'un mouvement d'actionnement de l'élément d'actionnement (70, 80) pour délivrer un signal à la commande du servofrein, caractérisé en ce que
- l'élément limiteur de trajet (82) est disposé sans jeu dans la direction d'actionnement sur l'élément d'actionnement (70, 80), et
- un support (86) recevant l'élément de circuit (85) est relié à l'élément limiteur de trajet (82).

2. Système de freinage selon la revendication 1,
caractérisé en ce que l'élément limiteur de trajet (82) est disposé sur l'élément d'actionnement (70, 80) entre deux épaulements (83, 84) et en ce que le support (86) est disposé entre l'élément limiteur de trajet (82) et l'un des deux épaulements (83, 84).

3. Système de freinage selon la revendication 1 ou 2, caractérisé en ce que
- le support (86) présente deux griffes (108a, 108b) qui sont en liaison mécanique en l'entourant au moins partiellement avec l'élément d'actionnement (80).

4. Système de freinage selon la revendication 1, 2 ou 3, caractérisé en ce que
- le support (86) s'étend principalement parallèlement à l'élément limiteur de trajet (82) entre les deux arrêts (91, 92) limitant le mouvement d'actionnement de l'élément d'actionnement (70).

5. Système de freinage selon l'une quelconque des revendications précédentes, caractérisé en ce que
- le support (86) présente un bras de support (114) sur lequel est disposé l'élément de circuit (85).

6. Système de freinage selon l'une au moins des revendications 3 et 5, caractérisé en ce que
- les griffes (108a, 108b) et/ou le bras de support (114) sont formés dans un matériau élastique en forme de feuille.

7. Système de freinage selon l'une au moins des revendications 2, 3 et 5, caractérisé en ce que
- les griffes (108a, 108b) et/ou le bras de support (114) sont courbés de telle façon que l'élément limiteur de trajet (82) et le support (86) soient logés sans jeu entre les deux épaulements (83, 84).

8. Système de freinage selon au moins la revendication 5, caractérisé en ce que
- le bras de support (114) est appliqué contre l'élément limiteur de trajet (82).

9. Système de freinage selon l'une quelconque des revendications précédentes, caractérisé en ce que
- l'élément de circuit (85) passe entre deux branches (89a, 89b) de l'élément limiteur de trajet (82) et est dirigé contre l'arrêt (91a) actionnant l'élément de circuit (85).

10. Système de freinage selon l'une quelconque des revendications précédentes, caractérisé en ce que
- l'élément de circuit (85) présente un levier de manoeuvre pouvant pivoter (102) dont l'extrémité libre (106) vient s'appliquer sur l'arrêt (91a) actionnant l'élément de circuit (85).

11. Système de freinage selon la revendication 10, caractérisé en ce que l'arrêt (91a) actionnant l'élément de circuit (85) est formé par un boîtier (42) du servofrein.

12. Système de freinage selon la revendication 10, caractérisé en ce que le levier de manoeuvre (102) peut être appliqué contre l'arrêt (91) de l'élément limiteur de trajet (82) et contre l'arrêt (91a) actionnant l'élément de circuit (85).

13. Système de freinage selon l'une quelconque des revendications 1 à 12, caractérisé en ce que le support (86) est relié de façon imperdable à l'élément limiteur de trajet (82) dans la direction du mouvement d'actionnement de l'élément d'actionnement (70, 80).

14. Système de freinage selon l'une quelconque des revendications 1 à 12, caractérisé en ce que l'élément de circuit (85) est relié de façon imperdable par au moins un élément de maintien (200) à l'élément limiteur de trajet (82), l'élément de maintien (200) reliant le support (86) ou l'élément de circuit (85) à l'élément limiteur de trajet (82).

15. Système de freinage selon la revendication 14, caractérisé en ce que l'élément de maintien (200) présente au moins un bras de maintien (88) d'une seule pièce avec le support (86) ou l'élément de circuit (85), qui est liaison mécanique avec l'élément limiteur de trajet (82) en l'entourant au moins partiellement.

16. Système de freinage selon la revendication 14, caractérisé en ce que l'élément de maintien (200) présente au moins une pince (893) qui presse le support (86) ou l'élément de circuit (85) contre l'élément limiteur de trajet (82).

17. Système de freinage selon la revendication 16, caractérisé en ce que la pince (893) est une pince élastique qui comprime élastiquement le support (86) ou l'élément de circuit (85) contre l'élément limiteur de trajet (82).

18. Système de freinage selon l'une quelconque des revendications 14 à 17, caractérisé en ce qu'au moins un élément de maintien (200) est disposé dans la zone de l'élément de circuit (85).

19. Système de freinage selon l'une quelconque des revendications 14 à 16, caractérisé en ce qu'au moins un élément de maintien (200) est disposé dans la zone de l'extrémité de l'élément limiteur de trajet (82) éloignée de l'élément d'actionnement (70, 80).

20. Système de freinage selon la revendication 19, caractérisé en ce qu'au moins un élément de maintien (200) pénètre dans un évidement (892) pratiqué dans l'élément limiteur de trajet (82).
